# EUROPÄISCHE PATENTSCHRIFT

(11) **EP 1 282 661 B1**
(45) Veröffentlichungstag und Bekanntmachung des Hinweises auf die Patenterteilung: **17.06.2009**
(21) Anmeldenummer: 01943301.0
(22) Anmeldetag: 30.04.2001
(51) Int. Cl.: C08K 13/08, C08L 77/00

(54) **VERSTÄRKTES POLYAMID MIT VERBESSERTEM WÄRMEALTERUNGSVERHALTEN**
REINFORCED POLYAMIDE WITH IMPROVED THERMAL AGEING PROPERTIES
POLYAMIDE RENFORCE A RESISTANCE AMELIOREE AU VIEILLISSEMENT THERMIQUE

(30) Priorität: 08.05.2000 DE 10022144
(43) Veröffentlichungstag der Anmeldung: 12.02.2003
(73) Patentinhaber: LANXESS Deutschland GmbH, 51369 Leverkusen (DE)
(72) Erfinder: POPHUSEN, Dirk, 51467 Bergisch Gladbach (DE); KLINGELHÖFER, Stefanie, 47809 Krefeld (DE); JOACHIMI, Detlev, 47800 Krefeld (DE); SCHERER, Cliff, 41366 Schwalmtal (DE); SCHULTE, Helmut, 47803 Krefeld (DE); IDEL, Karsten, 47802 Krefeld (DE)
(86) Internationale Anmeldenummer: PCT/EP2001/004846
(87) Internationale Veröffentlichungsnummer: WO 2001/085835

(56) Entgegenhaltungen:
- EP-A- 0 352 042
- US-A- 6 057 035

## Beschreibung

Die Erfindung betrifft Formmassen, enthaltend 60 bis 90 Gew.-Teile Polyamid, 10 bis 40 Gew.-Teile Verstärkungsstoffe (ausgenommen nanoskalige Schichtsilikate) und 0,5 bis 6 Gew.-Teile nanoskalige Schichtsilikate.

Im Rahmen der Bestrebungen eine Kraftstoffverbrauchsreduktion durch Gewichtsreduktion für Kraftfahrzeuge zu erzielen werden konventionell metallische Werkstoffe in kraftstoff oder betriebsstoffführenden- oder speichernden Teilen von Kraftfahrzeugen durch "leichtere" Werkstoffe mit niedrigeren spez. Dichten und insbesondere Kunststoffe ersetzt. Um ein ähnliches Niveau in den mechanischen Eigenschaften zu gewährleisten werden diese Kunststoffe in technischen Bauteilen, die mechanischen und thermischen Belastungen ausgesetzt sind, meist durch Fasern oder mineralische Füllstoffe verstärkt. Typische Anwendungen sind z.B. Rohre und Leitungen für den Kraftstofftransport, Ölwannen und Ansaugkrümmer.

Die Anwendungen "unter der Motorhaube" erfordern von den eingesetzten Werkstoffen eine hohe Beständigkeit ihrer mechanischen Eigenschaften gegenüber den dort auftretenden Temperaturen und Medien. Diese Anforderungen bestehen insbesondere auch als Langzeitanforderungen über die gesamte Nutzungszeit eines Fahrzeuges. Ein besonderes Augenmerk liegt hier auf der Betriebsfestigkeit bei Temperaturen von ca. 130°C und Zeiträumen von 3000 h unter Medieneinfluss wie z.B. bei Glykol/Wasserlagerung. Die üblicherweise eingesetzten Polyamide zeigen oftmals unter diesen Bedingungen einen zu deutlichen Abfall in der Zähigkeit.

Zudem weisen die für diese Anwendungen bisher eingesetzten Polyamide Defizite hinsichtlich der Permeation von Kohlenwasserstoffen auf. Kohlenwasserstoffe (HC) finden im Automotive-Bereich vielseitig Verwendung. Zum einen werden diese als Kraftstoffe z.B. in Form von Benzinen eingesetzt, zum anderen kommen sie als Betriebsstoffe z.B. in Form von Schmierstoffen als Öle vor. Vor dem Hintergrund der gestiegenen Anforderungen hinsichtlich der maximalen Emissionen von HC stellte sich die Aufgabe einen den mechanischen und thermischen Anforderungen genügenden Polyamidwerkstoff zu entwickeln, der eine verbesserte Barriere gegen HC aufweist.

In geschlossenen Kühlkreislaufsystemen erfordern Temperaturen von 130°C des Kühlmediums bei Drücken von 2 bar im mit Kühlmedium gesättigten Zustand eine hohe mechanische Festigkeit und Dichtigkeit des Werkstoffes zum Funktionieren des Kühlsystems. Als Kühlmedium wird im Automobilbereich meist eine 1:1 Mischung aus Ethylenglykol und Wasser bezeichnet.

Die Verwendung von hitzestabilisiertem, glasfaserverstärktem Polyamid (PA) für Anwendungen im KFZ-Bereich insbesondere im Motorraumbereich ist bekannt. Als Polyamide werden hier vor allem PA 6 und PA 66 eingesetzt. Aufgrund seiner höheren Wärmeformbeständigkeit eignet sich insbesondere PA 66. Um den unterschiedlichen Anforderungen nachzukommen, werden diese Polyamide oftmals modifiziert. Je nach geforderter Spezifikation sind die Materialien hitzestabilisiert, elastomermodifiziert und damit besonders schlagzäh, hydrolysebeständig oder zeigen eine reduzierte Wasseraufnahme (R. Zimnol, Kunststoffe 88 (1998) 5, S. 690-694, Carl Hanser Verlag, München).

In der EP-A 0 358 415 wird eine Polyamid-Formmasse mit verbesserten Barriereeigenschaften gegen Gase und Fluide beschrieben, die gleichmäßig verteiltes Schichtsilikat enthält. Diese Schichtsilikate weisen eine Seitenlänge zwischen 0,002 und 1 µm, sowie eine Dicke zwischen 6 und 20 Å auf.

In US-A 5 248 720 wird ein Verfahren zur Herstellung einer Polyamid-Formmasse beschrieben, die Schichtsilikate enthält. Solche Formmassen zeigen bei guten mechanischen und thermischen Eigenschaften eine verbesserte Barriere gegen Gase und finden in Leitungs- und Speichersystemen für Kraftstoffe Verwendung.

In JP-A 11 228 817 wird eine Polyamid-Formmasse mit geringer Sauerstoffpermeabilität beschrieben, die Schichtsilikate enthält. Verwendung finden sollen diese Formmassen als Benzintank und Rohre, Filter etc. für Kraftstoffleitungen.

In EP-A 0 810 260 und EP-A 0 810 259 werden eine Folie oder ein Formteil aus Polyamid mit nanodispersem Fluorglimmer beschrieben. Der Vorteil solcher Formmassen liegt in deren verbesserten Sauerstoffbarriere. Die optischen und mechanischen Eigenschaften bleiben erhalten. Einsatz finden solche Formmassen als Rohre und Tanks für Benzine und Öle.

Nachteil der Formmassen ist eine geringe Wärmealterungsbeständigkeit bei Glykol/Wasserlagerung.

Aufgabe der Erfindung war es, eine verstärkte polyamidbasierende Formmasse bereit zu stellen, die ein gegenüber dem Stand der Technik verbessertes Wärmealterungsverhalten bei Glykol/Wasserlagerung und zudem eine verbesserte Barriere gegen Kohlenwasserstoffe aufweist, ohne in den anderen mechanischen und thermischen Eigenschaften einen signifikanten Abfall gegenüber heute eingesetzten verstärkten Polyamidwerkstoffen zu zeigen.

Überraschenderweise hat es sich gezeigt, dass die Einarbeitung von nanoskaligen Schichtsilikaten in verstärkte Polyamidformmassen zu einer deutlich verbesserten Wärmealterungsbeständigkeit bei Glykol/Wasserlagerung und außerdem zu einer erhöhten Barriere gegen Kohlenwasserstoffe führt.

Gegenstand der Anmeldung sind Formmassen enthaltend Polyamid, Verstärkungsstoffe und nanoskalige Schichtsilikate. Bevorzugt sind Formmassen, enthaltend 60 bis 90 Gew.-Teile Polyamid, 10 bis 40 Gew.-Teile Verstärkungsstoffe (ausgenommen nanoskalige Schichtsilikate) und 0,5 bis 6 % nanoskalige Schichtsilikate.

Die Herstellung der Formmassen kann durch Einbringen der Schichtsilikate während der Polymerisation oder durch anschließende Eincompoundierung der Verstärkungsstoffe in einem Extrusionsverfahren erfolgen.

Die Herstellungsvorschriften können z.B. DE-A 199 48 850 entnommen werden.

Bei dem erfindungsgemäßen Schichtsilikat handelt es sich um ein natürliches oder synthetisches, quellfähiges Schichtsilikat. Typische Vertreter von quellfähigen Schichtsilikaten für diese Anwendung sind z.B. Montmorrillonit und Hektorit.

Bevorzugt werden sog. Organoclays eingesetzt, bei denen die Oberflächen durch Ionenaustausch mit organischen Komponenten (z.B. quartären Ammoniumverbindungen) modifiziert sind. Solche Organoclays werden z.B. in den Patentschriften DE-A 3 632 865 und DE-A 3 808 623 beschrieben. Die genannten Schriften sind Bestandteil der Offenbarung. Die in DE-A 3 632 865 und DE-A 3 808 623 aufgeführten Silicatschichten haben eine Dicke von 0,7 bis 1,2 nm.

Weitere typische Vertreter sind synthetischer Fluorglimmer. Solche Fluorglimmer werden z.B. in DE-A 196 21 309 beschrieben.

Die Mehrzahl der Teilchen besitzt nach Einarbeitung in die Polyamidmatrix eine Kantenlänge <1µm und eine Schichtdicke von 0,5 bis 2 nm.

Besonders bevorzugte Schichtsilikate sind Montmorrillonit, Hectorit, synthetischer Fluorglimmer.

Die Zugabe der erfindungsgemäßen Schichtsilikate kann vor, während oder nach der Polymerisation der Monomere zum Polyamid erfolgen. Erfolgt die Zugabe der erfindungsgemäßen Schichtsilikate nach der Polymerisation, so erfolgt sie vorzugsweise durch Zugabe zur Polyamidschmelze in einem Extruder. Erfolgt die Zugabe der erfindungsgemäßen Schichtsilikate vor oder während der Polymerisation, so kann die Polymerisation Phasen umfassen, in denen in Gegenwart von 1 bis 50 Gewichtsprozent Wasser gearbeitet wird.

Die Formmassen enthalten weitere faserförmige Verstärkungsstoffe und/oder mineralische Füllstoffe, wobei neben Glasfasern auch Kohlefasern, Aramidfasern, Mineralfasern und Whisker in Betracht kommen. Als geeignete mineralische Füllstoffe seien Beispielhaft Kalziumcarbonat, Dolomit, Kalziumsulfat, Glimmer, Fluorglimmer, Wollastonit, Talkum und Kaolin genannt. Aber auch andere Oxide oder Oxidhydrate eines Elementes ausgewählt aus der Gruppe Bor, Aluminium Gallium, Indium, Silizium, Zinn, Titan, Zirkonium Zink, Ytrium oder Eisen können eingesetzt werden. Zur Verbesserung der mechanischen Eigenschaften können die faserförmigen Verstärkungsstoffe und die mineralischen Füllstoffe oberflächenbehandelt sein.

Die Zugabe der Füllstoffe kann vor, während oder nach der Polymerisation der Monomere zum Polyamid erfolgen. Erfolgt die Zugabe der erfindungsgemäßen Füllstoffe nach der Polymerisation, so erfolgt sie vorzugsweise durch Zugabe zur Polyamidschmelze in einem Extruder. Erfolgt die Zugabe der erfindungsgemäßen Füllstoffe vor oder während der Polymerisation, so kann die Polymerisation Phasen umfassen, in denen in Gegenwart von 1 bis 50 Gew.-% Wasser gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmasse auftretenden Partikel erst im Laufe der Zugabe bzw. Einarbeitung entstehen. Diese Vorstufen können Hilfsstoffe enthalten, die z.B. dazu dienen, die Vorstufe zu stabilisieren oder die feinteilige Verteilung der Partikel in der Formmasse zu gewährleisten.
Solche Hilfsstoffe können z.B. Oberflächenrnodifikatoren sein.

Besonders bevorzugte Verstärkungsstoffe sind Glasfasern.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl-3,5,5-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie -Aminocapronsäure, -Aminoundecansäure oder -Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und -Caprolactam; oder aus Isophthalsäure, 3,3'-Dimethyl-4,4'-diamino-dicyclohexylmethan und Laurinlactam; oder aus Terephthalsäure und dem Isomerengemisch aus 2,24- und/oder 2,4,4-Trimethylhexamethylendiamin.

Anstelle des reinen 4,4'-Diaminodicyclohexylmethans können auch Gemische der stellungsisomeren Diaminodicyclohexyalmethane eingesetzt werden, die sich zusammensetzen aus

| | |
|---|---|
| 70 bis 99 mol-% | des 4,4'-Diamino-Isomeren |
| 1 bis 30 mol-% | des 2,4'-Diamino-Isomeren |
| 0 bis 2 mol-% | des 2,2'-Diamino-Isomeren |

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf

Die Verarbeitung der erfindungsgemäßen Formmassen zu Formteilen erfolgt üblicherweise über konventionelle Spritzgießmaschinen oder auch Blasformanlagen.

Die aus der erfindungsgemäßen Formmasse hergestellten Formteile finden Verwendung als Leitungs- oder Speichersysteme für kohlenwasserstoffenthaltende Kraft-oder Betriebsstoffe in Maschinen und Anlagen, wie z.B. Ölwannen, Kühlerwasserkästen, Filtergehäusen und Ansaugkrümmern. Sie unterliegen dabei mechanischen und thermischen Beanspruchungen.

Gegenstand der Anmeldung ist weiterhin die Verwendung der erfindungsgemäßen Formmassen zur Herstellung von Formkörpern wie z.B. Leitungssystemen für Kraft-und Betriebsstoffe, bevorzugt im Automobilbereich, Speichersysteme wie z.B. Ölvolumen.

Weiterer Gegenstand sind Formkörper, hergestellt aus dem erfindungsgemäßen Formmassen.

Die Herstellung kann z.B. über Extrusions- und/oder Spritzgießverfahren, Blasformverfahren, Thermoformverfahren und Sonderverfahren (GIT), insbesondere zur Herstellung von Rohren und Hohlkörpern erfolgen.

### Beispiele

### Herstellung der anmeldungsgemäßen thermoplastischen Formmassen und der Vergleichsformmassen

### Beispiel 1

Polyamid 66 (relative Viskosität η_{rel.} = 3,0, 0,5 gew.-%ige Lösung in m-Kresol) wurde mit 5 Gew.-% eines organisch modifizierten Montmorillonits (SCPX 1127-A, Southern Clay, USA, Talgfestsäure-methyl-bis-(2-hydroxyethyl)-ammoniumchlorid als Modifikator, 30 Gew.-% Glasfaser (P955; Vetrotex, 0,16 Gew.-% Montanesterwachs, 0,1 Gew.-% Ruß und 0,13 Gew.-% Hitzestabilisator auf einem Zweischneckenextruder der Fa. Werner & Pfleiderer (150 U/min; 10 kg/h) bei 300°C compoundiert, in ein Wasserbad extrudiert und granuliert.

### Beispiel 2

Analog wurde PA66 mit identischen Additiv- und Glasfasermengen ohne organisch modifizierten Montmorillonit compoundiert, in ein Wasserbad extrudiert und granuliert.

### Beispiel 3

PA 6 (Durethan^{®} B29, Bayer AG, Leverkusen, Deutschland, relative Viskosität η_{rel.} = 2,9, 0,5 Gew.-%ige Lösung in m-Kresol) wurde mit 2,7 Gew.-% eines organisch modifizierten Montmorillonits (Nanomer I24T, Nanocor, USA, ω-Aminododecansäure als Modifikator), 30 Gew.-% Glasfaser (P 955, Vetrotex), 0,16 Gew.-% Montanesterwachs, 0,1 Gew.-% Ruß und 0,13 Gew.-% Hitzestabilisator auf einem Zweischneckenextruder der Fa. Werner & Pfleiderer (100 U/min; 10 kg/h) bei 260°C compoundiert, in ein Wasserbad extrudiertg und granuliert.

### Beispiel 4

Analog wurde PA6 (Durethan^{®} B 29) mit identischen Additiv- und Glasfasermengen ohne organisch modifizierten Montmorillonit compoundiert, in ein Wasserbad extrudiert und granuliert.

### Beispiel 5

In einem Autoklaven wurde eine Mischung aus 8736 g Caprolactam, 1001, 1 g Aminohexansäure und 400 g eines organisch modifizierten Hectorits (EA-2533, Rheox Inc., USA, Tetrakis(2-hydroxyethyl)ammoniumchlorid als Modifikator) 2 h bei 90°C unter Stickstoff gerührt. Anschließend wurde auf 220°C erwärmt und 1 h bei dieser Temperatur weitergerührt, dann auf 270°C erhitzt und wiederum 1 h gerührt, bevor das Material abgesponnen wurde. Nach Extraktion und Trocknung wurde das Material mit 30 Gew.-% Glasfaser (CS7928, Bayer AG), 0,16 Gew.-% Montanesterwachs, 0,1 Gew.-% Ruß und 0,13 Gew.-% Hitzestabilisator auf einem Zweischneckenextruder der Fa. Werner & Pfleiderer (100 U/min; 10 kg/h) bei 260°C compoundiert, in ein Wasserbad extrudiert und granuliert.

### Untersuchungen zur Beurteilung der Formmassen

### Messung der Kraftstoffpermeation

Die Bestimmung der Kraftstoffpermeation erfolgte an 2 mm dicken 90 mm Durchmesser Rundscheiben, die aus spitzgegossenen Rechteckplatten 150 x 105 x 2 mm³ präpariert wurden.

Zur Bestimmung der Kraftstoffpermeation wurde der durch Permeation des Kraftstoffs bei 40°C hervorgerufene Gewichtsverlust der unten beschriebenen Meßzelle über die Zeit aufgezeichnet. Der Permeationswert wird im Bereich stationären Gewichtsverlustes bestimmt.

Die Meßzelle ist ein einseitig offenes Gefäß mit Ventilanschlüssen zur Belüftung und Befüllung des Kraftstoffes. Die offene Seite des Gefäßes wird über eine Dichtung mit der beschriebenen Rundscheibe aus der anmeldungsgemäßen Formmasse verschlossen. Nach Verschließen der Apparatur wird auf 40°C temperiert und bei dieser Temperatur der auf diese Temperatur temperierte Prüfkraftstoff drucklos (das heißt bei geöffnetem Belüftungsventil) eingefüllt.

Als Prüfkraftstoff wurden ein Gemisch nach DIN 51604 B/2 verwendet, das wie folgt zusammengesetzt ist (jeweils Vol.-%):

| | |
|---|---|
| Toluol | 42,25 % |
| Isooctan | 25,35 % |
| Diisobuten | 12,67 % |
| Ethanol | 4,23 % |
| Methanol | 15,0 % |
| Wasser | 0,5 % |

### Messung der Wärmealterungsbeständigkeit

Zur Beurteilung der Wärmealterung wurde die Veränderung der IZOD-Schlagzähigkeit nach ISO 180 1U bestimmt. Dazu wurden die Prüfkörper im Autoklaven bei 130°C in einem 1:1 (Vol.) Gemisch Ethylenglykol/Wasser gelagert. Die Ergebnisse eines Materials wurden auf den Ausgangswert bezogen, um den Effekt bedingt durch die Alterung hervorzuheben.

Die Ergebnisse aus Tabele 1 bestätigen, dass die erfindungsgemäßen Formmassen im Vergleich zu Formmassen ohne nanoskalige Schichtsilikate sowohl eine deutliche Verbesserung der Barrierefunktion gegen Kraftstoff als auch ein langsamere Wärmealterung bei Lagerung im Ethylenglykol/Wasser-Gemisch aufweisen, unabhängig davon, ob die Nanoschichtsilikate während der Polymerisation zugegeben werden oder eincompoundiert werden.

**Tabelle 1**

| | | **Beispiel 1** | **Beispiel 2 (Vergleich)** | **Beispiel 3** | **Beispiel 4 (Vergleich)** | **Beispiel 5** |
|---|---|---|---|---|---|---|
| | | | | | | |
| PA 66 | % | 64,61 | 69,61 | - | - | - |
| PA6 | % | - | - | 66,91 | 69,61 | 66,91 |
| Schichtsilikat¹⁾ | % | 5 | - | 2,7 | - | 2,7 |
| Glasfaser | % | 30 | 30 | 30 | 30 | 30 |
| | | | | | | |
| **Eigenschaft** | | | | | | |
| Schlagzähig -keit ISO 180 1U nach | | | | | | |
| 0 d | % | 100³⁾ | 100⁴⁾ | 100⁵⁾ | 100⁶⁾ | 100⁷⁾ |
| 7d | % | 126 | 115 | 122 | 64 | 99 |
| 14 d | % | - | - | 50 | 39 | 44 |
| 21 d | % | 84 | 73 | 28 | 20 | 23 |
| 42 d | % | 37 | 29 | - | 9 | - |
| | | | | | | |
| Kraftstoffpermeation | g/(m²d) | 7,2 | 11,1 | 6,6 | 12,6 | 5,6 |
| | | | | | | |

| | | | | | | |
|---|---|---|---|---|---|---|
| 1) SCPX1127-A, Beispiel 1; Nanomer I24T, Beispiel 3; EA-2533, Beispiel 5 2) 0,16 Gew.-% Montanesterwachs, 0,1 Gew.-% Ruß, 0,13 Gew.-% Hitzestabilisator 3) Startwert: 61,6 kJ/m² 4) Startwert: 65,4 kJ/m² 5) Startwert: 32,0 kJ/m² 6) Startwert: 70,0 kJ/m² 7) Startwert: 54,1 kJ/m² | | | | | | |

## Patentansprüche

1. Formmassen, enthaltend 60 bis 90 Gew.-Teile Polyamid, 10 bis 40 Gew.-Teile Verstärkungsstoffe (ausgenommen nanoskalige Schichtsilikate) und 0,5 bis 6 Gew.-Teile nanoskalige Schichtsilikate, wobei nanoskalig bedeutet, dass die Mehrzahl der Teilchen nach Einarbeitung in die Polymermatrix eine Kantenlänge < 1 µm und eine Schichtdicke von 0,5 bis 2 nm besitzt.

2. Formmassen gemäß Anspruch 1, wobei als Schichtsilikat Montmorrillonit, Hectorit und/oder synthetischer Fluorglimmer eingesetzt wird.

3. Formmasse gemäß einem oder mehreren der vorangegangenen Ansprüche, wobei als Verstärkungsstoffe Glasfaser eingesetzt werden.

4. Verwendung der Formmassen gemäß einem oder mehreren der vorangegangenen Ansprüche zur Herstellung von Formkörpern.

5. Verwendung gemäß Anspruch 4, wobei Formkörper Leitungssysteme für Kraft- und Betriebsstoffe und/oder Speichersysteme darstellen.

6. Formkörper, hergestellt gemäß einem oder mehreren der vorangegangenen Ansprüche.

7. Leitungssysteme für Kraft- und Betriebsstoffe und/oder Speichersysteme, hergestellt gemäß einem oder mehreren der vorangegangenen Ansprüche.

## Claims

1. Molding compositions comprising from 60 to 90 parts by weight of polyamide, from 10 to 40 parts by weight of reinforcing materials (other than nano-scale phyllosilicates), and from 0.5 to 6 parts by weight of nano-scale phyllosilicates, where nano-scale denotes that the majority of the particles, once they have been incorporated into the polymer matrix, have edge length <1µm and layer thickness of from 0.5 to 2 nm.

2. Molding composition according to Claim 1, where montmorillonite, hectorite, and/or synthetic fluoromica is used as phyllosilicate.

3. Molding composition according to one or more of the preceding claims, where glass fibers are used as reinforcing materials.

4. Use of the molding compositions according to one or more of the preceding claims for producing moldings.

5. Use according to Claim 4, where moldings are piping systems for fuels and for operating materials, and/or are storage systems.

6. Molding produced according to one and more of the preceding claims.

7. Piping systems for fuels and for operating materials, and/or storage systems, produced according to one or more of the preceding claims.

## Revendications

1. Matières à mouler, contenant 60 à 90 parties en poids de polyamide, 10 à 40 parties en poids de matières de renforcement (à l'exception de silicates lamellaires nanoparticulaires) et de 0,5 à 6 parties en poids de silicates lamellaires nanoparticulaires, "nanoparticulaires" signifiant qu'après incorporation dans la matrice polymère la plupart des particules ont une longueur de côté < 1 µm et une épaisseur de couche de 0,5 à 2 nm.

2. Matières à mouler selon la revendication 1, dans lesquelles on utilise comme silicate lamellaire la montmorillonite, l'hectorite et/ou un mica fluoré de synthèse.

3. Matière à mouler selon une ou plusieurs des revendications précédentes, dans laquelle on utilise comme matières de renforcement des fibres de verre.

4. Utilisation des matières à mouler selon une ou plusieurs des revendications précédentes, pour la production de corps moulés.

5. Utilisation selon la revendication 4, dans laquelle les corps moulés représentent des systèmes de canalisation pour carburants et matières servant au fonctionnement et/ou des systèmes de réservoirs.

6. Corps moulés, produits selon une ou plusieurs des revendications précédentes.

7. Systèmes de canalisation pour carburants et matières servant au fonctionnement et/ou systèmes de réservoirs, produits selon une ou plusieurs des revendications précédentes.
